Europäisches Patentamt

European Patent Office

Office européen des brevets

(11) Publication number: **0 138 514**
A2

(12) **EUROPEAN PATENT APPLICATION**

(21) Application number: **84306753.9**

(22) Date of filing: **04.10.84**

(51) Int. Cl.⁴: **A 23 G  9/12,** F 25 D  23/12, F 25 D  17/06

(30) Priority: **11.10.83  US 540996**

(43) Date of publication of application: **24.04.85** **Bulletin 85/17**

(84) Designated Contracting States: **AT BE CH DE FR GB IT LI LU NL SE**

(71) Applicant: **Magic Chef Inc., 740 King Edward Avenue S.E., Cleveland Tennessee 37311 (US)**

(72) Inventor: **Mandel, Sheldon W., 1703 Bridge Street, Galesburg Illinois 61401 (US)** Inventor: **Beers, David G., Route No. 2 Box 259, Galesburg Illinois 61401 (US)**

(74) Representative: **Higgins, Michael Roger et al, Marks & Clerk 57/60 Lincoln's Inn Fields, London WC2A 3LS (GB)**

(54) **Improved heat exchange device for a frozen food product maker.**

(57)  The device is for enhancing heat exchange between a mix container within the mix cannister (7) of a frozen food product maker (5) and cold air in the freezing compartment (3) of a refrigeration unit (1), and includes a plenum (21) carried by the maker and detachably connected to the cold air duct (33) of the evaporator (29) for directing cold air against and along the exterior surface of the mix cannister under positive pressure to produce a high heat transfer coefficient.

M&C FOLIO: 230P48755                    WANGDOC: 0094h

## IMPROVED HEAT EXCHANGE DEVICE
## FOR A FROZEN FOOD PRODUCT MAKER

The present invention involves the field of technology pertaining to devices for making frozen food products in the freezing compartment of a refrigeration unit. More specifically, the invention is directed to an improved means for enhancing heat exchange between the contents of a mix cannister associated with a frozen food product maker and the cold air generated by the evaporator of a refrigeration unit.

The making of a high quality frozen food product, particularly ice cream or a similar frozen dessert, in the freezing compartment of a refrigeration unit requires careful consideration of several factors. These include the nature and composition of the food mix, the agitation of the mix during the freezing process, the length of time for freezing the mix to the proper consistency, and the heat exchange between the mix contained within the mix cannister and the cold air in the freezing compartment.

The field of prior art pertaining to devices for making frozen food products is rather active. Devices of this type are typically characterised by a cannister for containing the food product mix, a motorised auger for stirring the mix, and some means for facilitating the required heat exchange between the contents of the cannister and the cold air in the freezing compartment.

The prior art has recognised that heat exchange between the contents of a mix cannister and the cold air in the freezing compartment can be enhanced by making the cannister from a material having high thermal conductivity, such as metal. It is also known to provide the cannister with plural spaced fins on its exterior surface for further enhancing heat exchange. It is further recognised that a small fan carried by the device or disposed in the freezing compartment can assist in creating circulation of the cold air around the cannister, thereby increasing the rate of heat exchange. However, these approaches for facilitating heat exchange do have certain disadvantages. For example, the incorporation of heat exchange fins on the exterior surface of a metal mix cannister is costly, generally requiring hand machining or the fabrication of complex mold structures. The addition of a small fan on the device itself or in the freezing compartment has not proven especially efficient because of the obvious difficulty in assuring a uniform heat exchange coefficient around substantially the entire exterior of the mix cannister.

According to a first aspect of the invention, there is provided a device for enhancing heat exchange between a mix contained within a mix cannister of a frozen food product maker and cold air generated by the evaporator of a refrigerated compartment and directed into the compartment under positive pressure through a cold air duct, which device comprises:

a) a plenum including a cold air input and an open cavity for receiving the mix cannister;

b) means for providing detachable air flow connection between the cold air input of the plenum and the output of the cold air duct; and

c) the periphery of the cavity opening being spaced from the exterior surface of the mix cannister when the latter is received within the cavity to form an annular space therebetween, the annular space defining a cold air output through which cold air from the plenum may be directed under positive pressure against and along the exterior surface of the mix cannister.

Preferred and/or optional features of the first aspect of the invention are set forth in claims 2-6.

According to a second aspect of the invention, there is provided a frozen food product maker including a mix cannister for making frozen food products in a refrigerated compartment cooled by cold air generated by an evaporator and directed into the compartment under positive pressure through a cold air duct, a plenum including a cold air input and an open cavity for receiving the mix cannister, means for providing detachable air flow connection between the cold air input of the plenum and the output of the cold air duct, and the periphery of the cavity opening being spaced from the exterior surface of the mix cannister to form an annular space therebetween, the annular space defining a cold air output through which cold air from the plenum may be directed under positive pressure against and along the exterior surface of the mix cannister.

Preferred and/or optional features of the second aspect of the invention are set forth in claims 8-14.

According to a third aspect of the invention there is provided a frozen food product maker comprising a mix cannister for making frozen food products in a refrigerated compartment cooled by cold air generated by an evaporator and directed into the compartment under positive pressure through a cold air duct and means for directing the cold air from the cold air duct so that it attaches to and flows along the exterior surface of the mix cannister.

The invention makes use of the Coanda Effect wherein high pressure and velocity air flow tend to remain attached to a surface against which it is directed, with such attachment being realised notwithstanding the configuration of the surface or its orientation, to establish an extremely uniform and high heat exchange coefficient.

The invention will now be more particularly described, by way of example only, with reference to the accompanying drawings, in which:-

Figure 1 is a front elevational view of a first embodiment of the present invention shown in association with a frozen food product maker and installed in the freezing section of a refrigeration unit;

Figure 2 is an enlarged fragmentary horizontal sectional view, partly in elevation, showing the detachable connection between the plenum and output of the evaporator cold air duct, taken substantially on the line 2-2 of Figure 1;

Figure 3 is a fragmentary vertical sectional view, partly in elevation, taken through the cold air duct of the evaporator and depicting the path of air travel from the evaporator and up through the plenum surrounding the mix cannister of the frozen food product maker;

Figure 4 is a fragmentary plan view, partly in section, of a second embodiment of the invention wherein a blower fan is associated with the means for detachably connecting the plenum to the output of the evaporator cold air duct; and

Figure 5 is a fragmentary vertical sectional view of the embodiment depicted in Figure 4.

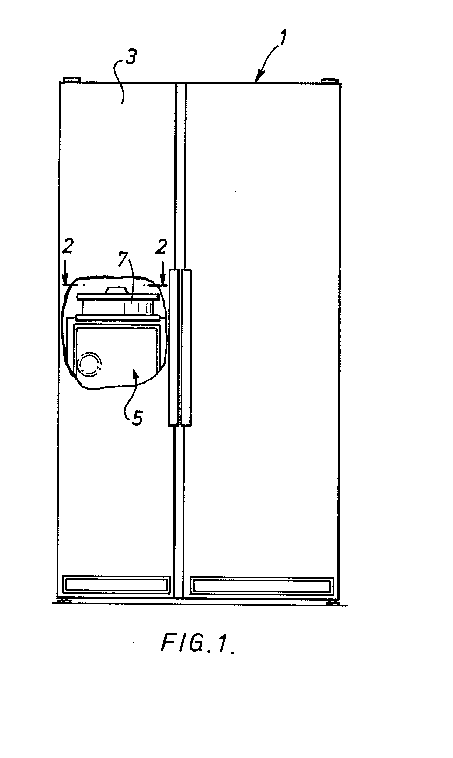

A first embodiment of the invention shall now be described with reference to Figures 1-3 of the drawings. As shown therein, a conventional refrigeration unit 1 includes a freezing compartment 3 within which is disposed a frozen food product maker 5, such as an ice cream maker or the like. Maker 5 includes a mix cannister 7 for containing the food product mix.

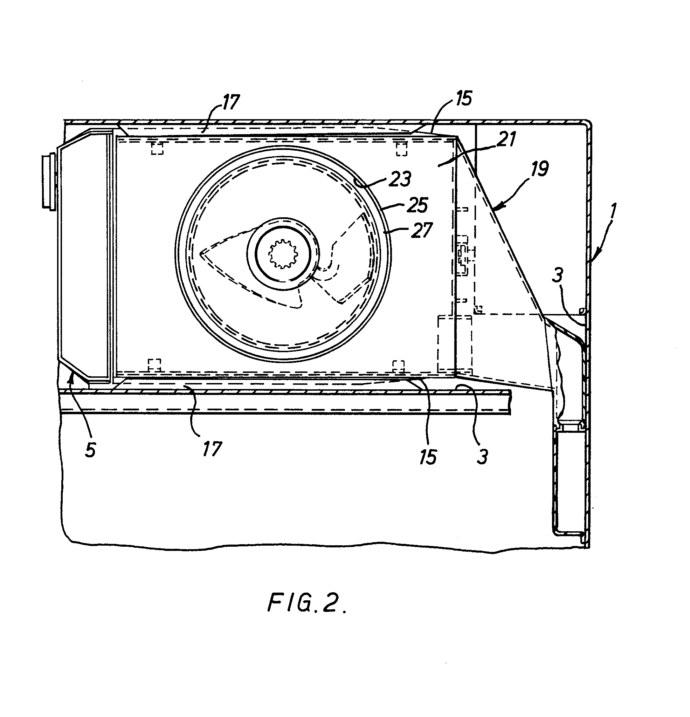

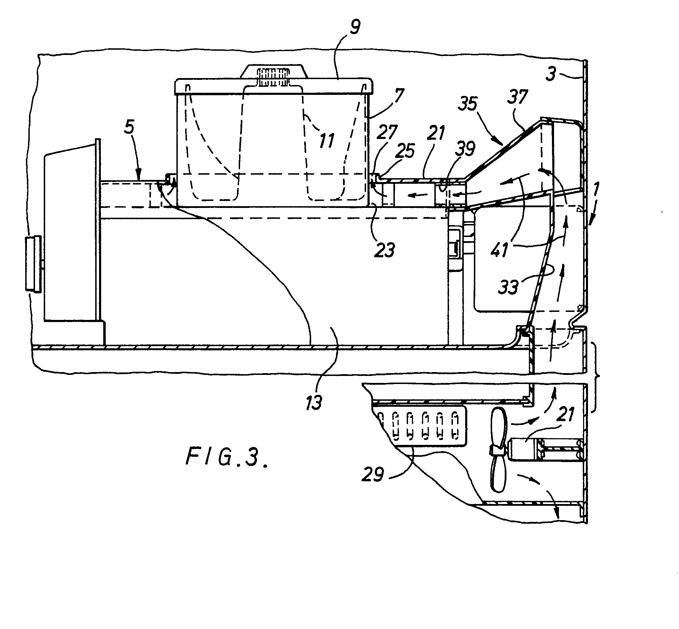

As more particularly shown in Figs. 2 and 3, cannister 7 is of cylindrical configuration and provided with a detachable cover 9. An auger blade 11 of any appropriate configuration is disposed within cannister 7 for stirring the mix contained therein. Cannister 7 may be supported on a housing 13 which is provided with a pair of opposed longitudinal ribs 15 for sliding engagement within corresponding opposed slots 17 carried by the interior walls of freezing compartment 3.

An improved heat exchange device 19 according to a first embodiment of the invention is shown in association with maker 5. Device 19 includes a plenum 21 which is supported on the upper surface of housing 13. Plenum 21 is provided with a cavity 23 within which the lowermost portion of cannister 7 may be disposed. The peripheral opening of cavity 23 is defined by a raised lip 25 which surrounds and is spaced from the exterior surface of cannister 7 to form an annular space 27 therebetween. It is preferred that lip 25 be continuous and correspond to the general exterior configuration of cannister 7, and be equally spaced therefrom so that annular space 27 is of uniform width and defines the cold air output of plenum 21.

As more particularly shown in Fig. 3, refrigeration unit 1 includes an evaporator 29 which generates cold air that is introduced into freezing compartment 3 by means of an appropriate blower fan 31 which imparts positive pressure to the cold air as it travels from evaporator 29 to the interior of freezing compartment 3 through a cold air duct 33. The detachable connection of plenum 21 to the output of duct 33 may be accomplished by means of a connector duct 35, the latter including a shroud 37 for direct connection to the output of duct 33 and an adapter channel 39 which permits detachable connection of the cold air input of plenum 21 to shroud 37. Plenum 21 surrounds cannister 7 and is preferably sealed to the top of housing 13 in a substantially air tight manner so that air flow therethrough occurs only at the input defined by adapter channel 39 and the output defined by annular space 27. The detachable connection of plenum 21 to shroud 37 by means of adapter channel 39 is facilitated through the keyed alignment of maker 5 in freezing compartment 3, this alignment being accomplished through cooperating ribs 15 and grooves 17.

As is clearly apparent from Fig. 3, cold air generated by evaporator 29 is placed under positive pressure by blower fan 31 and passed upwardly through duct 33 in the direction indicated by arrows 41. After the cold air is introduced into plenum 21 through adapter channel 39, it tends to fill the interior of plenum 21 and surrounds the lower portion of cannister 7. Thereafter, the cold air travels upwardly through annular space 27 along the remaining exterior surface of cannister 7 to effect heat exchange with the food product mix contained therein. Since the cold air passing into plenum 21 is placed under positive pressure by blower fan 31, it tends to become attached to the exterior surface of cannister 7 as it travels upwardly therealong. This phenomenon is known as the Coanda Effect and the realization of which forms an important aspect in the practice of the present invention. The Coanda Effect occurs when air flow under positive pressure, i.e. high pressure/velocity, is directed against a surface. Under this condition, the air flow becomes attached to the surface, notwithstanding the configuration of the surface or its orientation. This attachment necessarily diminishes dispersion of the air flow, a disadvantage in certain fields of technology, such as air conditioning, but a decided advantage in the practice of the instant invention. This is because the attachment of the cold air to the exterior surface of cannister 7 permits the use of a cannister having a smooth exterior surface which is more economical to produce. Moreover, the attachment of the cold air also obviates the need for enclosing the exterior surface of cannister 7, a requirement normally found in known heat exchange devices wherein the benefits of positive pressure air flow is not recognized and recirculation of air flow is desired.

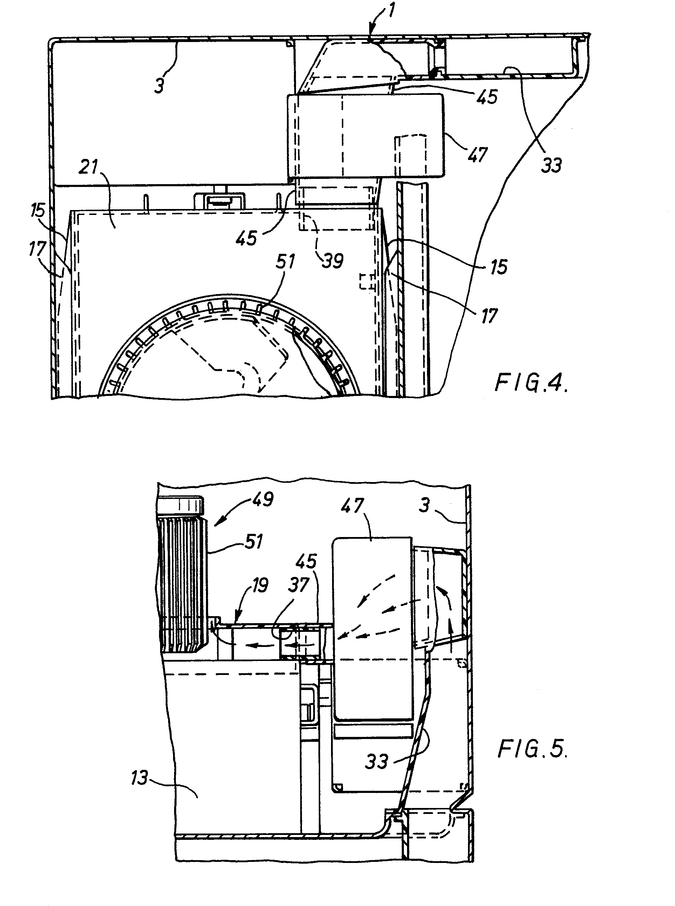

A second embodiment of the invention shall now be described with particular reference to Figs. 4 and 5. As shown therein, device 19 is provided with a modified shroud 45 which has incorporated therein a supplemental blower fan 47 for the purpose of augmenting the positive pressure imparted to the cold air by existing evaporator fan 31. Fan 47 may serve to greatly increase both the pressure and velocity of the cold air prior to its introduction into plenum 21 in those applications wherein a very high rate of heat exchange is desired. In such instances, it may also be of advantage to utilize a mix cannister 49 provided with a plurality of circumferentially spaced longitudinal heat exchange fins 51 on its exterior surface. However, it is to be understood that the utilization of cannister 49 with heat exchange fins 51 is entirely optional and is in no way a requirement for the practice of the invention wherein the realization of enhanced heat exchange is adequately realized through the use of a mix cannister having a smooth or substantially smooth exterior surface.

Though both embodiments of the invention as disclosed herein are shown in association with a frozen food product maker provided with a verticaally oriented cylindrical mix cannister, it is to be understood that mix cannisters of other configurations and orientations may also be effectively utilized. Though the invention is preferably practiced in conjunction with mix cannisters made of metal, such as aluminum, cannisters formed of any material having adequate thermal conductivity can also be used. The simplicity of the invention permits it to be readily modified for practice with a variety of frozen food product makers, and is particularly advantageous when used in conjunction with ice cream makers having vertically oriented cylindrical mix cannisters.

It is to be understood that the forms of the invention herein shown and described are to be taken as

-8-

merely preferred examples of the same, and various changes in the shape, size, composition and arrangement of parts may be resorted to by one ordinarily skilled in the art without departing from the scope of the invention defined in the claims appendent hereto.

9

CLAIMS:

1. A device for enhancing heat exchange between a mix contained within a mix cannister (7;49) of a frozen food product maker (5) and cold air generated by an evaporator (29) of a refrigerated compartment (3) and directed into the compartment under positive pressure through a cold air duct (33), which device comprises:

a) a plenum (21) including a cold air input and an open cavity (23) for receiving the mix cannister (7;49);

b) means (35;45) for providing detachable air flow connection between the cold air input of the plenum (21) and the output of the cold air duct (33); and

c) the periphery of the cavity opening (23) being spaced from the exterior surface of the mix cannister (7;49) when the latter is received within the cavity to form an annular space (27) therebetween, the annular space (27) defining a cold air output through which cold air from the plenum (21) may be directed under positive pressure against and along the exterior surface of the mix cannister (7;49).

2. The device of Claim 1, wherein the cavity opening (23) is of a circular configuration.

3. The device of Claim 1 or Claim 2, wherein the periphery of the cavity opening includes an outwardly

10

extending continuous lip (25) for directing the cold air against and along the exterior surface of the mix cannister.

4. The device of anyone of Claims 1-3, wherein the means (35) for providing detachable air flow connection includes:

   a) a shroud (37) for receiving cold air from the output of the cold air duct; and

   b) an adapter channel (39) for detachably connecting the cold air input of the plenum to the shroud.

5. The device of anyone of Claims 1-4, wherein the means (45) for providing detachable air flow connection includes a blower fan (47) for increasing the positive pressure of the cold air.

6. The device of anyone of the preceding claims, wherein the open cavity (23) receives and encloses substantially only the lowermost portion of the mix cannister (7;49).

7. A frozen food product maker including a mix cannister (7;49) for making frozen food products in a refrigerated compartment (3) cooled by cold air generated by an evaporator (29) and directed into the compartment under positive pressure through a cold air duct (33), a plenum (21) including a cold air input and an open cavity (23) for receiving the mix cannister (7;49), means (35;45) for providing detachable air flow connection between the cold air input of the plenum (21) and the output of the cold air duct (33), and the periphery of the cavity opening (23) being spaced from the exterior surface of the mix cannister (7;;49) to form an annular space (27) therebetween, the annular space (27) defining a cold air output through which cold air from the plenum (21) may be directed under positive pressure against and along the exterior surface of the mix cannister (7;49).

8. The frozen food product maker of Claim 7, wherein the mix cannister (7;49) is of cylindrical configuration.

9. The frozen food product maker of Claim 8, wherein the exterior surface of the mix cannister (7) is substantially smooth.

10. The frozen food product maker of Claim 7, wherein the mix cannister (7;49) is of metal and includes a plurality of spaced heat exchange fins (51) on its exterior surface.

12

11. The frozen food product maker of anyone of Claims 7-9, wherein the open cavity (23) receives and encloses substantially only the lowermost portion of the mix cannister (7;49).

12. The frozen food product maker of anyone of Claims 7-11, wherein the periphery of the cavity opening includes an outwardly extending continuous lip (25) for directing the cold air against and along the exterior surface of the mix cannister.

13. The frozen food product maker of anyone of Claims 7-12, wherein the means (35) for providing detachable air flow connection includes a shroud (37) for receiving cold air from the output of the cold air duct, and an adapter channel (39) for detachably connecting the cold air input of the plenum to the shroud.

14. The frozen food product maker of anyone of Claims 7-13, wherein the means (45) for providing detachable air flow connection includes a blower fan (47) for increasing the positive pressure of the cold air.

15. A frozen food product maker comprising a mix cannister (7;49) for making frozen food products in a refrigerated compartment (3) cooled by cold air

13

generated by an evaporator (29) and directed into the compartment (3) under positive pressure through a cold air duct (33) and means (21,35;21,45) for directing the cold air from the cold air duct (33) so that it attaches to and flows along the exterior surface of the mix cannister (7;49).

FIG.1.

FIG.2.

FIG.3.

FIG.4.

FIG.5.